(19) Europäisches Patentamt
European Patent Office
Office européen des brevets

(11) EP 2 808 536 B1

(12) # EUROPEAN PATENT SPECIFICATION

(45) Date of publication and mention of the grant of the patent:
**11.12.2019 Bulletin 2019/50**

(51) Int Cl.:
***F02N 11/08*** *(2006.01)* ***F02N 11/10*** *(2006.01)*

(21) Application number: **14170129.2**

(22) Date of filing: **27.05.2014**

(54) **Engine control unit**

Motorsteuerungseinheit

Boîtier de commande du moteur

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.05.2013 JP 2013115860**

(43) Date of publication of application:
**03.12.2014 Bulletin 2014/49**

(73) Proprietor: **Mitsubishi Jidosha Kogyo Kabushiki Kaisha**
**Tokyo 108-8410 (JP)**

(72) Inventor: **Funakoshi, Hiroshi**
**Tokyo, 108-8410 (JP)**

(74) Representative: **Vossius & Partner**
**Patentanwälte Rechtsanwälte mbB**
**Siebertstrasse 3**
**81675 München (DE)**

(56) References cited:
**EP-A1- 2 532 868** **EP-A1- 2 597 291**
**EP-A2- 2 570 651** **DE-A1-102011 001 470**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 808 536 B1

## Description

The present invention relates to a unit that controls an engine equipped in a vehicle.

An idling stop and start control (hereinafter abbreviated as "ISS control"), one of the engine controls of a vehicle, has been developed. The ISS control involves an idling-stop for automatically stopping the engine if a predetermined idling-stop condition is satisfied, and an idling-start thereafter for restarting the engine if a predetermined restart condition is satisfied. Such techniques are disclosed in Patent Literature 1 (Japanese Patent Application Publication Laid-Open No. 2012-255383) and Patent Literature 2 (Japanese Patent Application Publication Laid-Open No. 2011-196288).

In Patent Literature 1, if an idling-stop condition including a road-grade in a stationary-state of the vehicle being not higher than a first predetermined grade is satisfied, an ISS controller (automatic stop controller) stops the idling. The ISS controller includes an auxiliary power unit to avoid a voltage drop in a battery upon an idling-start, and a brake unit to restrict movements of the vehicle during the stop of the engine. Any failure in the ISS controller is diagnosed during its operation.

In Patent Literature 1, the idling-stop condition includes a road-grade being not higher than a second predetermined grade which is smaller than the first predetermined grade before the completion of the failure diagnosis for the ISS controller, to inhibit the idling-stop at a road-grade higher than the second predetermined grade. In other words, idling-stop and idling-start are performed only at the second predetermined grade or lower before the failure determination for the ISS controller. The normality of operations of the ISS controller is diagnosed at a low-grade road (having a grade of not higher than the second predetermined grade), to avoid or prevent unexpected movements of the vehicle regardless of a failure in the ISS controller.

In Patent Literature 2, if an idling-stop condition including the speed of the vehicle being not higher than a predetermined speed is satisfied, an idling-stop is performed. In other words, the idling-stop is started during coasting at immediately before the stop of the vehicle. This configuration can further improve the fuel efficiency.

In Patent Literature 2, a condition for the initial idling-stop includes the speed of the vehicle being zero or less than another set speed which is lower than the predetermined speed. If a condition for the initial idling-start holds, the normality of the idling-stop system is diagnosed. This configuration can avoid troubles in the running vehicle under an ISS control, regardless of some abnormality in the idling-stop system before the diagnosis.

Furthermore, running includes coasting described below.

In terms of the fuel efficiency, the technique of Patent literature 1 for idling-stops only in a stationary-state of the vehicle is less advantageous than the technique of Patent Literature 2 for idling-stops started during coasting. In terms of avoidance of the unexpected behaviors of the vehicle during an idling-stop, the technique of Patent Literature 2 for performing the initial idling-stop and finding a failure depending on not a road-grade condition but only a strict speed condition is less advantageous than the technique of Patent Literature 1 for finding a failure only at a low-grade road.

EP 2 570 651 A2 discloses a vehicle control device that ensures a frequency of automatic stopping of an engine during deceleration of a vehicle while suppressing rolling backwards of the vehicle even if a road surface has a gradient.

EP 2 597 291 A1 discloses an internal combustion engine of a vehicle that is automatically stopped when a first automatic stopping condition is established while the vehicle is stationary or a second automatic stopping condition is established while the vehicle travels.

An object of the invention, which has been accomplished in light of the problems described above, is to provide an engine control unit that can achieve the compatibility between easy avoidance of the unexpected behaviors of a vehicle during an idling-stop and the improved fuel efficiency.

Another object of the invention is to provide advantageous effects that are derived from the individual features described below but not from conventional techniques.

The object above can be achieved by the features defined in the claims.

Particularly, to achieve the objects, the engine control unit according to the invention includes: an idling-stop controller to automatically stop an engine equipped in a vehicle if a coasting-state idling-stop condition or a stationary-state idling-stop condition is satisfied, the coasting-state idling-stop condition including a coasting-state of the vehicle at a speed or lower, the stationary-state idling-stop condition including a stationary-state of the vehicle; an idling-start controller to restart the engine if a restart condition is satisfied during an automatic stop of the engine by the idling-stop controller; and a road-grade acquirer to acquire a road-grade at the location of the vehicle. The coasting-state idling-stop condition includes the road-grade acquired by the road-grade acquirer being not higher than a first coasting-state road-grade, before an initial automatic stop of the engine by the idling-stop controller. The coasting-state idling-stop condition includes the road-grade acquired by the road-grade acquirer being not higher than a second coasting-state road-grade higher than the first coasting-state road-grade, after the initial automatic stop of the engine by the idling-stop controller.

The phrase "initial automatic stop of the engine" refers to "the first automatic stop caused by the idling-stop controller since the manual start of the engine for launching the vehicle".

The first coasting-state road-grade, which indicates the highest road-grade that can be deemed to be flat, is 2°, for example. The second coasting-state road-grade is 4°, for example.

During an automatic stop of the engine in the coasting vehicle, vibrations and the longitudinal acceleration due to acceleration or deceleration of the vehicle disturb the accuracy of estimation of a road-grade. An automatic stop of the engine on the basis of an inaccurate road-grade may cause troubles in the automatic stop of the engine. The acquisition of accurate road-grades is therefore important.

The stationary-state idling-stop condition includes the road-grade acquired by the road-grade acquirer being not higher than a first stationary-state road-grade higher than the first coasting-state road-grade, before the initial automatic stop of the engine by the idling-stop controller; and the stationary-state idling-stop condition includes the road-grade acquired by the road-grade acquirer being not higher than a second stationary-state road-grade higher than the first stationary-state road-grade, after the initial automatic stop of the engine by the idling-stop controller.

The road-grade acquirer acquires a road-grade estimated based on the longitudinal acceleration of the vehicle in a stationary-state, and acquires a road-grade estimated based on the longitudinal acceleration of the vehicle and another parameter corresponding to the running state of the vehicle in a running-state.

The engine control unit further includes a diagnoser to find some abnormality in devices operating during an automatic stop of the engine or a restarts of the engine, and the idling-start controller restarts the engine if the diagnoser finds some abnormality in the devices operating during an automatic stop of the engine or a restart of the engine, during the automatic stop of the engine. This restart process is executed even if the restart condition is not satisfied.

The idling-stop controller inhibits an automatic stop of the engine if the diagnoser finds some abnormality in the devices operating during an automatic stop of the engine or a restart of the engine.

It is preferred that the devices operating during an automatic stop of the engine or a restart of the engine include a stationary-state retainer to maintain braking force to the vehicle for keeping its stationary-state, during an automatic stop of the engine of the vehicle in the stationary-state.

In the engine control unit according to the invention, the coasting-state idling-stop condition includes, for example, a road-grade acquired by the road-grade acquirer being not higher than the first coasting-state road-grade (i.e., the highest road-grade that can be deemed to be flat), before an initial automatic stop of the engine by the idling-stop controller. That is, the initial automatic stop of the engine in a coasting-state of the vehicle is performed at the first coasting-state road-grade or lower. This configuration can readily avoid the unexpected behaviors of the vehicle during an automatic stop of the engine, regardless of some abnormality in devices in the engine control unit.

The coasting-state idling-stop condition includes a road-grade acquired by the road-grade acquirer being not higher than the second coasting-state road-grade higher than the first coasting-state road-grade, after the initial automatic stop of the engine. That is, the engine can be automatically stopped in a coasting-state of the vehicle at a road-grade not higher than the second coasting-state road-grade higher than the first coasting-state road-grade, after the initial automatic stop of the engine. In other words, automatic stops of the engine are available in the coasting-state at not only flat roads but also slopes having the second coasting-state road-grade or lower, after the initial automatic stop of the engine. This configuration can increase the frequency of automatic stops of the engine in the coasting-state, to improve the fuel efficiency.

The invention thus can readily avoid the unexpected behaviors of the vehicle during an automatic stop of the engine, and increase the frequency of automatic stops of the engine to improve the fuel efficiency.

The nature of this invention, as well as other objects and advantages thereof, will be explained in the following with reference to the accompanying drawings, in which like reference characters designate the same or similar parts throughout the figures and wherein:

FIG. 1 is a schematic diagram illustrating the entire configuration of an engine control unit according to an embodiment of the invention; and

FIG. 2 is a flowchart illustrating steps of a control of an engine control unit according to the embodiment of the invention.

An embodiment of the invention will now be described with reference to the drawings. The engine control unit according to the embodiment is equipped in a vehicle. Examples of the vehicle include small cars, such as passenger cars, and large cars, such as trucks and buses.

[Embodiment]

[Configuration]

The entire configuration of an engine control unit according to an embodiment will now be described with reference to FIG. 1. The engine control unit performs an idling stop and start control (hereinafter abbreviated as "ISS control"). In specific, the engine control unit performs an idling-stop to automatically stop an engine 1 if an idling-stop condition holds, and performs an idling-start (engine restart) to restart the engine 1 if a restart condition holds during the idling-stop.

The engine control unit includes an electronic control unit (ECU) 10. The ECU 10 includes a large scale integration (LSI) device or an embedded electronic device into which a microprocessor, a read only memory (ROM), and a random access memory (RAM) are integrated.

The output of the ECU 10 is connected to devices 1 and 3 to 5, which are controlled by the ECU 10 and are supplied with power from a battery 2. The input of the ECU 10 is connected to sensors 6 to 9 for detecting information necessary for the ISS control and its accompanying controls. The input of the ECU 10 is also connected to an ignition switch (ignition SW) 20. The engine control unit encompasses the ECU 10, the devices 1 to 5 on its output side, and the sensors 6 to 9 on its input side.

The devices 1 to 5 on the output side of the ECU 10 will now be described.

The engine 1 is an internal combustion engine under the ISS control. The engine 1 is provided with a starter motor (not shown) for starting (cranking) the engine 1. The battery 2 feeds power to the starter motor to start the engine 1.

The battery 2 is a secondary battery to feed power to the electrical equipment of the vehicle, such as the devices 1 and 3 to 5 as described above. The battery 2 is charged through the operations of an alternator (not shown) driven by the engine 1, and is discharged during the operations of the electrical equipment of the vehicle, such as the devices 1 and 3 to 5.

Because of the limited capacity of the battery 2, its voltage may drop in response to an increase in power consumption of the equipment such as the devices 1 and 3 to 5. For example, the voltage of the battery 2 readily drops during a stop of the engine 1, since the alternator is not driven. The voltage of the battery 2 significantly drops upon the restart of the engine 1, since the alternator is not driven and the restart process requires a large amount of power.

A DC/DC converter 3 is a booster to compensate for a drop in the voltage from the battery 2. The input of the DC/DC converter 3 is connected to the battery 2. The output of the DC/DC converter 3 is connected to a stationary-state retainer 4 and other devices 5 (described below) via power supply lines (illustrated with solid lines).

The DC/DC converter 3 has an operating mode for boosting the voltage from the battery 2 and outputting the boosted voltage, and a non-operating mode for outputting the voltage from the battery 2 as it is without boosting. These modes can be switched by a change-over switch (not shown).

The stationary-state retainer 4 is electrically operated to maintain braking force to the vehicle for keeping its stationary-state. The stationary-state retainer 4 includes a brake 4a to brake the vehicle, and a motor pump 4b to discharge hydraulic fluid to operate the brake 4a. In the stationary-state retainer 4, discharge of the hydraulic fluid from the motor pump 4b activates the brake 4a. In specific, in a stationary-state of the vehicle, the operating motor pump 4b activates the brake 4a to keep the stationary-state of the vehicle, while the non-operating motor pump 4b does not activate the brake 4a to release the vehicle from the stationary-state.

The other devices 5 (illustrated with a dashed line) include, for example, a car navigation system and ECUs other than the ECU 10. The other devices 5 may have troubles due to a drop in the applied voltage. The other devices 5 may be omitted.

The sensors 6 to 9 on the input side of the ECU 10 will now be described.

The brake switch (brake SW) 6 detects a braking operation of a driver. The information on the braking operation detected with the brake switch 6 is transmitted to the ECU 10. The brake switch 6 may be replaced with any other detector, such as brake-fluid pressure sensor, that detects a braking operation of the driver. In this case, the information on the brake-fluid pressure detected with the brake-fluid pressure sensor is transmitted to the ECU 10.

The speed sensor 7 detects the speed V of the vehicle. The information on the speed V detected with the speed sensor 7 is transmitted to the ECU 10.

The G-sensor 8 detects a longitudinal acceleration $\alpha_S$ of the vehicle, to determine a grade of a road on which the vehicle is running. The information on the longitudinal acceleration $\alpha_S$ of the vehicle detected with the G-sensor 8 is transmitted to the ECU 10.

The other sensors 9 (illustrated with a dashed line) detect other information (e.g., a driver's manipulation of an accelerator or a steering, or a charging state of the battery 2), if the ECU 10 requires the information for the ISS control in addition to the information detected with the brake switch 6, the speed sensor 7, and the G-sensor 8. The other sensors 9 may be omitted if the ECU 10 requires no other information.

The ignition switch 20 has a lock position, an accessory position, an ignition-ON position, and a start position. The ignition switch 20 is manipulated by a driver into the start position and functions as a starter switch for manually starting the engine 1. The ignition switch 20 at the ignition-ON position can activate the engine 1 and various systems in the vehicle, such as the engine control unit including the ECU 10. The ECU 10, which is connected to the ignition switch 20, detects a manual start of the engine 1 by the driver on the basis of manipulation signals from the ignition switch 20.

Although the ECU 10 controls a wide variety of systems related to the engine 1, the following description of the ECU 10 will focus on the configurations for the ISS control.

The ECU 10 includes several functional components, such as a road-grade acquirer 11 to acquire a road-grade

$\theta$ at the location of the vehicle (hereinafter abbreviated as "road-grade"); a diagnoser 12 to diagnose (find some abnormality) the states of various devices equipped in the vehicle, in particular, components operating under an idling-stop control; an idling-stop condition determiner 14; an idling-stop controller 15; and an idling-start controller 16.

During an idling-stop to automatically stop the engine 1 and make the vehicle into a stationary-state, the ECU 10 outputs control signals for maintaining braking force to the vehicle and keeping its stationary-state, to the stationary-state retainer 4. In specific, if the speed V detected with the speed sensor 7 indicates the stationary-state of the vehicle during an idling-stop, the ECU 10 controls the motor pump 4b of the stationary-state retainer 4 to maintain the operations of the brake 4a, thereby keeping the stationary-state of the vehicle. Upon completion of the idling-start thereafter, the ECU 10 controls the motor pump 4b of the stationary-state retainer 4 to stop operating the brake 4a, thereby releasing the vehicle from the stationary-state.

The phrase "the speed V detected with the speed sensor 7 indicates the stationary-state of the vehicle" refers to that the speed V detected with the speed sensor 7 is not higher than a threshold speed (i.e., 0 km/h or substantially 0 km/h) defining the stationary-state.

The ECU 10 outputs control signals for operating the DC/DC converter 3 during the idling-stop to stop the engine 1, and outputs control signals for stopping the DC/DC converter 3 upon completion of the idling-start to restart the engine 1. That is, the ECU 10 controls the DC/DC converter 3 to compensate for a voltage drop in the battery 2 between the beginning of the stop of the engine 1 under the idling-stop control and the completion of the restart under the idling-start control. The voltage of the battery 2 significantly drops during the idling-start, since the restart of the engine 1 requires a large amount of power. The DC/DC converter 3 also operates during the idling-start, to compensate for the drop in the voltage applied to the stationary-state retainer 4 and the other devices 5.

The road-grade acquirer 11, the diagnoser 12, the idling-stop condition determiner 14, the idling-stop controller 15, and the idling-start controller 16 will now be described in sequence.

The road-grade acquirer 11 acquires a road-grade $\theta$, for example, by estimation calculation. The road-grade acquirer 11 includes several functional components, such as a stationary-state road-grade estimator 11a and a running-state road-grade estimator 11b. The road-grade acquirer 11 acquires a road-grade $\theta_S$ from the stationary-state road-grade estimator 11a, and a road-grade $\theta_C$ from the running-state road-grade estimator 11b. In the road-grade acquirer 11, the stationary-state road-grade estimator 11a estimates the road-grade $\theta_S$ if the speed V detected with the speed sensor 7 indicates the stationary-state of the vehicle, and the running-state road-grade estimator 11b estimates the road-grade $\theta_C$ if the speed V detected with the speed sensor 7 does not indicate the stationary-state.

The stationary-state road-grade estimator 11a will now be described. The stationary-state road-grade $\theta_S$ is estimated based on the longitudinal acceleration $\alpha_S$ detected with the G-sensor 8 without considering effects caused by the run of the vehicle.

The stationary-state road-grade estimator 11a estimates the stationary-state road-grade $\theta_S$ through Expression (1):

$$\sin\theta_S = \alpha_S/g \qquad \text{Expression (1)}$$

where $\alpha_S$ is the longitudinal acceleration of the vehicle detected with the G-sensor 8, and g is the gravitational acceleration.

The running-state road-grade estimator 11b will now be described. During running of the vehicle, the longitudinal acceleration $\alpha_S$ detected with the G-sensor 8 varies depending on the running state even at a constant road-grade. The running-state road-grade estimator 11b therefore estimates the road-grade $\theta_C$ through correction of the longitudinal acceleration $\alpha_S$ detected with the G-sensor 8 on the basis of the running state of the vehicle. In specific, the road-grade $\theta_C$ is estimated based on Expressions (2) and (3).

The acceleration $\alpha_V$ of the vehicle is calculated through Expression (2) for differentiating the speed V detected with the speed sensor 7 with respect to time:

$$\alpha_V = dV/dt \qquad \text{Expression (2)}$$

The road-grade $\theta_C$ is calculated through Expression (3) below, such that the difference between the longitudinal acceleration $\alpha_S$ detected with the G-sensor 8 and the acceleration $\alpha_V$ of the vehicle calculated through Expression (2) is divided by the gravitational acceleration g:

$$\sin\theta_C = (\alpha_S-\alpha_V)/g \qquad \text{Expression (3)}$$

If the brake switch 6 detects a braking operation, the running-state road-grade estimator 11b may estimate the road-grade $\theta_C$ through further correction of the road-grade calculated through Expression (3) into a higher grade (steepening an uphill slope, or making a downhill slope gentler) . In a vehicle running at a certain road-grade, the front part of the vehicle under a braking operation sinks in comparison with that without a braking operation. Such inclination of the vehicle relative to the road-grade should be corrected, to improve the accuracy of estimation of the road-grade.

The running-state road-grade estimator 11b estimates the running-state road-grade $\theta_C$, on the basis of parameters corresponding to the running state of the vehicle, such as the longitudinal acceleration $\alpha_S$ detected with the G-sensor 8, the speed V detected with the speed sensor 7, and a braking operation detected with the brake switch 6, as described above.

The diagnoser 12 diagnoses devices equipped in the vehicle. Among the devices to be diagnosed by the diagnoser 12, some are diagnosed at a substantially constant accuracy regardless of the operating modes of the devices, and the others can be diagnosed at a higher accuracy in an operating mode than that in a non-operating mode. The devices include some components of the engine control unit. In this aspect, the diagnoser 12 performs a self-diagnosis of the engine control unit.

The diagnoser 12 diagnoses the devices at any timing, for example, upon a manual start of the engine 1, during an idling-stop, and during an idling-start. For example, the diagnoser 12 diagnoses the sensors upon a manual start of the engine 1; diagnoses the devices for an idling-stop control, such as the stationary-state retainer 4, during an idling-stop; and diagnoses the devices for restart of the engine 1, such as the DC/DC converter 3 (described below), during an idling-start.

Although the diagnoser 12 can diagnose any component operating under the idling-stop control, the following description will focus on the DC/DC converter 3 and the stationary-state retainer 4, which operate under the ISS control (i.e., during an automatic stop of the engine 1 and a restart of the engine 1) and are suitable for diagnosis during their operations.

The DC/DC converter 3, which operates upon a voltage drop caused by the restart of the engine 1, should be diagnosed during an idling-start to restart the engine 1. The DC/DC converter 3 also operates upon a manual start of the engine 1 by a driver as well as during the idling-start when the manual start of the engine 1 readily causes a voltage drop like the idling-start. The DC/DC converter 3, however, is not diagnosed upon the manual start of the engine 1 because the diagnosis may not be performed properly due to incomplete activation of the components of the engine control unit including the ECU 10 including the diagnoser 12.

The diagnosis of the DC/DC converter 3 with the diagnoser 12 will now be described.

The diagnoser 12 diagnoses the DC/DC converter 3 during an idling-start. The DC/DC converter 3 is diagnosed while it is significantly boosting the voltage of the battery 2, to improve the accuracy of the diagnosis.

The diagnoser 12 diagnoses the DC/DC converter 3, for example, through comparison of the output voltage of the DC/DC converter 3 with a voltage. In this case, the DC/DC converter 3 is diagnosed to be normal if the output voltage is higher than the voltage, and is diagnosed to be abnormal if the output voltage is not higher than the voltage. The voltage is experimentally or empirically determined in advance, for example, by adding a margin to the lowest voltage that can properly operate the electrical equipment, such as the stationary-state retainer 4 and the other devices 5, which may have troubles due to a drop in the applied voltage.

The diagnoser 12 may diagnose the DC/DC converter 3 during an idling-stop to stop the engine 1, instead of during an idling-start. This configuration can also allow diagnosis of the DC/DC converter 3 in an operating mode other than the idling-start. The accuracy of diagnosis during the idling-stop is lower than that during the idling-start because of a smaller increment in the voltage boosted by the DC/DC converter 3.

The diagnosis of the stationary-state retainer 4 with the diagnoser 12 will now be described. The diagnoser 12 diagnoses the stationary-state retainer 4 between the beginning of an idling-stop to stop the engine 1 and the completion of an idling-start. The stationary-state retainer 4, which keeps the stationary-state of the vehicle during the idling-stop to stop the engine 1, is diagnosed by the diagnoser 12 within a time at which the vehicle stops. In specific, the diagnoser 12 diagnoses whether the brake 4a and the motor pump 4b of the stationary-state retainer 4 are in a normal operating mode.

The diagnoser 12 diagnoses the stationary-state retainer 4, for example, through comparison of the actual pressure of the hydraulic fluid for operating the brake 4a or the hydraulic fluid discharged from the motor pump 4b with a pressure. In this case, the stationary-state retainer 4 is diagnosed to be normal if the actual pressure is higher than the pressure, and is diagnosed to be abnormal if the actual pressure is lower than the pressure. The pressure is experimentally or empirically determined in advance by adding a margin to the lowest pressure of the hydraulic fluid that can operate the brake 4a to keep the stationary-state of the vehicle.

The stationary-state retainer 4 may also be diagnosed through comparison of the voltage applied to the brake 4a or the motor pump 4b with a voltage, like the diagnosis of the DC/DC converter 3.

The ECU 10 controls the diagnoser 12 to determine satisfaction of a diagnostic condition. If an idling-stop condition (described in detail below) holds under satisfaction of the diagnostic condition, the idling-stop controller 15 performs an idling-stop.

The phrase "diagnostic condition" refers to a condition that the diagnoser 12 finds no abnormality in the devices. The diagnostic condition holds if the diagnoser 12 diagnoses the devices to be normal, or if the diagnoser 12 has not diagnosed the devices yet. In other words, the diagnostic condition also holds when the normality of the devices is unclear.

The idling-stop condition consists of a speed condition, a road-grade condition, and the other condition. That is, satisfaction of the idling-stop condition requires satisfaction of all the speed condition, the road-grade condition, and the other condition.

The phrase "speed condition" refers to a condition that the speed V detected with the speed sensor 7 is lower than a speed $V_1$. The speed $V_1$ is experimentally or empirically determined in advance, to be the highest speed immediately before the stop of the vehicle that can be deemed to reflect a driver's intention to stop the vehicle. The speed $V_1$ is, for example, 10 to 15 km/h.

The speed condition is satisfied if the speed V detected with the speed sensor 7 is lower than the speed $V_1$, that is, in both cases where the speed V indicates the stationary-state of the vehicle (the speed V is substantially 0 km/h) and where the speed V does not indicate the stationary-state. The idling-stop condition that holds for the speed V indicating the stationary-state is defined as a stationary-state idling-stop condition, while that for the speed V not indicating the stationary-state is defined as a coasting-state idling-stop condition.

The road-grade condition differs between the stationary-state and the coasting-state of the vehicle, and differs between before and after the initial idling-stop (automatic stop of the engine 1). The phrase "initial idling-stop" refers to the first automatic stop of the engine 1 since the manual start of the engine 1 by a driver to launch the vehicle. The experience of the idling-stop is cleared through a manual stop of the engine 1 by the driver.

The road-grade conditions for the stationary-state and the coasting-state will now be described in sequence. The satisfaction of the road-grade condition is determined based on the road-grade $\theta$ acquired by the road-grade acquirer 11. In specific, the determination is based on the road-grade $\theta_S$ estimated with the stationary-state road-grade estimator 11a, or the road-grade $\theta_C$ estimated with the running-state road-grade estimator 11b, depending on the speed of the vehicle.

The road-grade condition for the stationary-state differs between before and after the initial idling-stop.

The road-grade condition for the stationary-state before the initial idling-stop requires the road-grade $\theta_S$ estimated with the stationary-state road-grade estimator 11a to be a first stationary-state road-grade $\theta_{PS1}$ or lower.

That is, the stationary-state idling-stop condition includes the road-grade $\theta_S$ estimated with the stationary-state road-grade estimator 11a being not higher than the first stationary-state road-grade $\theta_{PS1}$ before the initial idling-stop.

In contrast, the road-grade condition for the stationary-state after the initial idling-stop requires the road-grade $\theta_S$ estimated with the stationary-state road-grade estimator 11a to be a second stationary-state road-grade $\theta_{PS2}$ or lower. The second stationary-state road-grade $\theta_{PS2}$ is higher than the first stationary-state road-grade $\theta_{PS1}$.

That is, the stationary-state idling-stop condition includes the road-grade $\theta_S$ estimated with the stationary-state road-grade estimator 11a being not higher than the second stationary-state road-grade $\theta_{PS2}$ after the initial idling-stop.

The road-grade condition for the coasting-state differs between before and after the initial idling-stop.

The road-grade condition for the coasting-state before the initial idling-stop requires the road-grade $\theta_C$ estimated with the running-state road-grade estimator 11b to be a first coasting-state road-grade $\theta_{PC1}$ or lower. The first coasting-state road-grade $\theta_{PC1}$ is lower than the first stationary-state road-grade $\theta_{PS1}$.

That is, the coasting-state idling-stop condition includes the road-grade $\theta_C$ estimated with the running-state road-grade estimator 11b being not higher than the first coasting-state road-grade $\theta_{PC1}$ before the initial idling-stop.

In contrast, the road-grade condition for the coasting-state after the initial idling-stop requires the road-grade $\theta_C$ estimated with the running-state road-grade estimator 11b to be a second coasting-state road-grade $\theta_{PC2}$ or lower.

That is, the coasting-state idling-stop condition includes the road-grade $\theta_C$ estimated with the running-state road-grade estimator 11b being not higher than the second coasting-state road-grade $\theta_{PC2}$ after the initial idling-stop.

The stationary-state road-grades $\theta_{PS}$ and the coasting-state road-grades $\theta_{PC}$ are experimentally or empirically determined in advance. The coasting-state road-grade $\theta_{PC}$ is gentler (i.e., has a lower value) than the stationary-state road-grade $\theta_{PS}$. In other words, the stationary-state road-grade $\theta_{PS}$ is steeper (i.e., has a higher value) than the coasting-state road-grade $\theta_{PC}$.

The estimation of the running-state road-grade $\theta_C$ can be disturbed by changes in the running state of the vehicle, such as a variation in the speed and a braking operation, while the estimation of the stationary-state road-grade $\theta_S$ is not readily affected by such disturbing factors . For example, the attitude of the vehicle readily varies in the running-state, but is basically constant in the stationary-state; hence, the road-grade $\theta$ can be more accurately estimated in the stationary-state than in the running-state.

The stationary-state road-grade $\theta_{PS}$ for determination of the stationary-state road-grade $\theta_S$, which is more accurately estimated, is steeper than the coasting-state road-grade $\theta_{PC}$ for determination of the coasting-state road-grade $\theta_C$. The range of the grade that satisfies the road-grade condition is wider in the stationary-state than that in the coasting-state, so that the road-grade condition more readily holds in the stationary-state than in the coasting-state.

The first stationary-state road-grade $\theta_{PS1}$ is 5°, while the second stationary-state road-grade $\theta_{PS2}$ is 10°, for example. The first coasting-state road-grade $\theta_{PC1}$ (i.e., the highest road-grade that can be deemed to be flat) is 2°, while the second coasting-state road-grade $\theta_{PC2}$ is 4°, for example.

The other condition will now be described.

The phrase "other condition" refers to a condition that a driver's intention to stop the vehicle is determined under satisfaction of all the several preconditions required for an idling-stop.

The several preconditions in the other condition include, for example, the completion of warming-up of the engine 1, a non-operating mode or no necessity of devices driven by the engine 1 (e.g., a non-operating mode of an air conditioner using a compressor driven by the engine 1, a non-operating mode of the equipment of the vehicle powered by the alternator driven by the engine 1, and a negative pressure in the brake master back using the intake negative pressure of the engine 1 being not lower than a pressure), the activation of catalysts for purifying exhaust gas, and the normality of the sensors related to operations of the engine 1.

The phrase "driver's intention to stop the vehicle is determined" refers to detection of a manipulation of a service brake and no manipulation of the accelerator (i.e., the engine 1 being in an idling mode).

The idling-stop condition may further include additional conditions, such as no driver's manipulation of the steering, and sufficient charging of the battery 2 to power the starter motor (not shown) to start the engine 1. In this case, the idling-stop condition determiner 14 determines satisfaction of the additional conditions on the basis of the information detected with the other sensors 9, to determine satisfaction of the idling-stop condition.

The idling-stop condition determiner 14 checks for the satisfaction of the idling-stop condition.

In specific, the idling-stop condition determiner 14 determines satisfaction of the idling-stop condition if all the speed condition, the road-grade condition, and the other condition hold; and determines non-satisfaction of the idling-stop condition if none of the speed condition, the road-grade condition, and the other condition holds.

The idling-stop controller 15 stops the idling if the idling-stop condition determiner 14 determines satisfaction of the idling-stop condition. In other words, the idling-stop controller 15 automatically stops the engine 1 if the idling-stop condition holds.

In addition, the idling-stop controller 15 inhibits an idling-stop if the diagnoser 12 diagnoses the equipment, such as the DC/DC converter 3 and the stationary-state retainer 4, to be abnormal. In other words, the idling-stop controller 15 inhibits an idling-stop if the ECU 10 determines non-satisfaction of the diagnostic condition.

The idling-start controller 16 performs an idling-start if it determines satisfaction of a restart condition.

The phrase "restart condition" refers to a condition requiring at least either of "detection of a driver's intention to launch the vehicle" and "non-satisfaction of any of the several preconditions in the idling-stop condition." The phrase "detection of a driver's intention to launch the vehicle" refers to detection of a driver's release of the service brake. That is, satisfaction of the idling-stop condition leads to non-satisfaction of the restart condition, while satisfaction of the restart condition leads to non-satisfaction of the idling-stop condition in the embodiment.

The idling-start controller 16 performs an idling-start if the restart condition holds during an idling-stop. In contrast, the idling-start controller 16 does not perform an idling-start if the restart condition does not hold during the idling-stop.

The idling-start controller 16 determines satisfaction of the restart condition through determination of a driver's braking operation to the vehicle on the basis of detection signals from the brake switch 6, and determination of satisfaction of the several preconditions.

The restart condition regarding a driver's intention to launch the vehicle is not limited to the above-described condition, and may be a driver's manipulation of the accelerator or the steering, for example. In this case, the idling-start controller 16 determines satisfaction of the restart condition on the basis of the information detected with the other sensors 9.

The idling-start controller 16 performs an idling-start regardless of satisfaction of the restart condition, if the diagnoser 12 diagnoses the equipment, such as the DC/DC converter 3 and the stationary-state retainer 4, to be abnormal during an idling-stop.

[Flowchart]

The process of the control of the ECU 10 will now be explained with reference to the flowchart of FIG. 2. Regarding a flag F in FIG. 2, F=0 indicates that the diagnoser 12 finds some abnormality in the devices while F=1 indicates that the diagnoser 12 finds no abnormality in the devices. The flag F also represents whether the diagnostic condition holds, such that F=1 indicates satisfaction of the diagnostic condition while F=0 indicates non-satisfaction of the diagnostic condition. The control process is started upon a manual start of the engine 1 (ignition ON) and is repeated at a cycle. The steps in the flowchart are achieved by the individual functions allocated to the hardware of the ECU 10 under the control of the software (computer program).

In Step S10, whether the flag F is 0 is determined. In other words, whether the diagnostic condition holds is determined in Step S10. If the diagnostic condition holds (F=1), the process goes to Step S20. If the diagnostic condition does not hold (F=0), the process goes to Step S100.

In Step S20, the diagnoser 12 diagnoses whether the devices have some abnormality. The process then goes to Step S22.

In Step S22, it is determined whether the diagnosis in Step S20 finds some abnormality in the devices. If some abnormality is found, the process goes to Step S23. If no abnormality is found, the process goes to Step S30.

In Step S30, it is determined whether the other condition included in the idling-stop condition holds. If the other condition holds, the process goes to Step S31. If not, the current cycle of the control process is terminated.

In Step S31, it is determined whether the speed V is lower than the speed $V_1$. In other words, it is determined whether the speed V decreases below the speed $V_1$ in Step S31. If the speed V is lower than the speed $V_1$, the process goes to Step S32. If not, the current cycle of the control process is terminated.

In Step S32, it is determined whether the speed V indicates the stationary-state of the vehicle (i.e., the speed V is substantially zero). If the speed V indicates the stationary-state, the process goes to Step S33. If the speed V does not indicate the stationary-state (i.e., indicates the coasting-state), the process goes to Step S36.

In Step S33, it is determined whether the current state is before the initial idling-stop (initial IS). If the current state is before the initial idling-stop, the process goes to Step S34. If the current state is after the initial idling-stop, the process goes to Step S35.

In Step S34, it is determined whether the road-grade $\theta_S$ estimated with the stationary-state road-grade estimator 11a is the first stationary-state road-grade $\theta_{PS1}$ or lower. If the road-grade $\theta_S$ is the first stationary-state road-grade $\theta_{PS1}$ or lower, the process goes to Step S40. If not, the current cycle of the control process is terminated.

In Step S35, it is determined whether the road-grade $\theta_S$ estimated with the stationary-state road-grade estimator 11a is the second stationary-state road-grade $\theta_{PS2}$ or lower, like Step S34. If the road-grade $\theta_S$ is the second stationary-state road-grade $\theta_{PS2}$ or lower, the process goes to Step S40. If not, the current cycle of the control process is terminated.

In Step S36, it is determined whether the current state is before the initial idling-stop (initial IS), like Step S33. If the current state is before the initial idling-stop, the process goes to Step S37. If the current state is after the initial idling-stop, the process goes to Step S38.

In Step S37, it is determined whether the road-grade $\theta_C$ estimated with the running-state road-grade estimator 11b is the first coasting-state road-grade $\theta_{PC1}$ or lower. If the road-grade $\theta_C$ is the first coasting-state road-grade $\theta_{PC1}$ or lower, the process goes to Step S40. If not, the current cycle of the control process is terminated.

In Step S38, it is determined whether the road-grade $\theta_C$ estimated with the running-state road-grade estimator 11b is the second coasting-state road-grade $\theta_{PC2}$ or lower, like Step S37. If the road-grade $\theta_C$ is the second coasting-state road-grade $\theta_{PC2}$ or lower, the process goes to Step S40. If not, the current cycle of the control process is terminated.

Steps S30 to S38 determine the satisfaction of the idling-stop condition. In specific, Step S30 is dedicated for the determination of satisfaction of the other condition included in the idling-stop condition, Steps S31 and S32 for the speed condition, and Steps S33 to S38 for the road-grade condition.

In Step S40, an order for an idling-stop is provided, to stop the idling. The process then goes to Step S50.

In Step S50, the diagnoser 12 determines whether the devices have some abnormality, like Step S20. In Step S52, it is determined whether the diagnosis in Step S50 finds some abnormality in the devices, like Step S22. Steps S50 and S52 may also involve the diagnosis peculiar to the idling-stop. If some abnormality is found, the process goes to Step S82. If no abnormality is found, the process goes to Step S60.

In Step S60, whether the restart condition holds is determined. If the restart condition holds, the process goes to Step S70. If not, the current cycle of the control process is terminated.

In Step S70, an order for an idling-start is provided, to perform the idling-start. The process then goes to Step S80.

In Step S80, the diagnoser 12 diagnoses whether the devices have some abnormality, like Steps S20 and S50. In Step S81, it is determined whether the diagnosis in Step S80 finds some abnormality in the devices, like Steps S22 and S52. If some abnormality is found, the process goes to Step S82. If no abnormality is found, the current cycle of the control process is terminated.

In Step S82, the flag F is set to be 0. The current cycle of the control process is then terminated.

In Step S23, the flag F is set to be 0. The process then goes to Step S100.

In Step S100, an idling-stop is inhibited. For example, an idling-start is performed during an idling-stop. The current cycle of the control process is then terminated.

[Advantageous Effects]

The engine control unit according to the embodiment, which has the configurations described above, shows the following advantageous effects.

In the engine control unit according to the embodiment, the coasting-state idling-stop condition includes the road-grade $\theta_C$ estimated with the running-state road-grade estimator 11b being not higher than the first coasting-state

road-grade $\theta_{PC1}$ (i.e., the highest road-grade that can be deemed to be flat), before an initial idling-stop by the idling-stop controller 15. That is, the initial idling-stop in a coasting-state of the vehicle is performed at a road-grade $\theta_C$ estimated to be not higher than the first coasting-state road-grade $\theta_{PC1}$. This configuration can readily avoid the unexpected behaviors of the vehicle during an idling-stop even if the normality of the devices in the engine control unit is unclear or even if the devices have some abnormality.

The coasting-state idling-stop condition includes the road-grade $\theta_C$ estimated with the running-state road-grade estimator 11b being not higher than the second coasting-state road-grade $\theta_{PC2}$ higher than the first coasting-state road-grade $\theta_{PC1}$, after the initial idling-stop. That is, the idling can be stopped in a coasting-state of the vehicle at a road-grade not higher than the second coasting-state road-grade $\theta_{PC2}$ higher than the first coasting-state road-grade $\theta_{PC1}$, after the initial idling-stop. In other words, idling-stops are available in the coasting-state at not only flat roads but also slopes having the second coasting-state road-grade $\theta_{PC2}$ or lower, after the initial idling-stop. This configuration can increase the frequency of idling-stops in the coasting-state, to improve the fuel efficiency.

These configurations can achieve the compatibility between easy avoidance of the unexpected behavior of the vehicle during an idling-stop and the improved fuel efficiency due to the increased frequency of idling-stops.

After the initial idling stop, the devices in the engine control unit are more likely to be normal, for example. In this case, the stationary-state idling-stop condition includes the road-grade $\theta_S$ being not higher than the second stationary-state road-grade $\theta_{PS2}$ higher than the first stationary-state road-grade $\theta_{PS1}$. This configuration can increase the frequency of idling-stops in a stationary-state of the vehicle to improve the fuel efficiency without unexpected behaviors of the vehicle.

The stationary-state idling-stop condition includes the road-grade $\theta_S$ being not higher than the first stationary-state road-grade $\theta_{PS1}$ lower than the second stationary-state road-grade $\theta_{PS2}$, before the initial idling-stop. That is, the initial idling-stop in a stationary-state of the vehicle is performed at a flat road or a gentle slope of not higher than the first stationary-state road-grade $\theta_{PS1}$. This configuration can readily avoid the unexpected behaviors of the vehicle even if the normality of the devices equipped in the vehicle is unclear or even if the devices have some abnormality.

The stationary-state idling-stop condition includes the road-grade being not higher than the first stationary-state road-grade $\theta_{PS1}$ higher than the first coasting-state road-grade $\theta_{PC1}$, before the initial idling-stop. That is, the initial idling-stop is more likely to be performed in a stationary-state of the vehicle than in a coasting-state. This configuration can more readily avoid the unexpected behaviors of the running vehicle.

The road-grade acquirer 11 includes the stationary-state road-grade estimator 11a for estimation of a stationary-state road-grade $\theta_S$, and the running-state road-grade estimator 11b for estimation of a running-state road-grade $\theta_C$. This configuration allows appropriate estimation of a road-grade $\theta$ for each of the running and stationary states of the vehicle.

In specific, the stationary-state road-grade estimator 11a estimates a stationary-state road-grade $\theta_S$, on the basis of the longitudinal acceleration $\alpha_S$ detected with the G-sensor 8. The running-state road-grade estimator 11b estimates a road-grade $\theta_C$, on the basis of not only the longitudinal acceleration $\alpha_S$ but also parameters corresponding to the running state of the vehicle, such as the speed V detected with the speed sensor 7 and a braking operation detected with the brake switch 6, to compensate for the disturbance to the estimation of the road-grade. This configuration can ensure sufficient accuracy of estimation of the running-state road-grade $\theta_C$. The accurate running-state road-grade $\theta_C$ can be used for the condition to start an idling-stop, thereby leading to the compatibility between avoidance of the unexpected behaviors of the vehicle and the improved fuel efficiency.

The idling-start controller 16 forces the engine 1 to restart if the diagnoser 12 finds some abnormality in the devices during an idling-stop, to prevent the engine 1 from remaining stopped in spite of the abnormality in the devices. This configuration can avoid troubles due to some abnormality in the devices.

The idling-stop controller 15 inhibits an idling-stop if the diagnoser 12 finds some abnormality in the devices, to prevent the engine 1 from being stopped in spite of the abnormality in the devices. This configuration can avoid troubles due to some abnormality in the devices.

The diagnoser 12 diagnoses the normality of the devices, which operate during an automatic stop of the engine 1 or a restart of the engine 1, during an automatic stop of the engine 1 or a restart of the engine 1. The diagnoser 12 can therefore certainly diagnose the devices, such as the DC/DC converter 3 and the stationary-state retainer 4, which operate during the automatic stop of the engine 1 or the restart of the engine 1. The diagnoser 12 can diagnose the devices suitable for diagnosis during their operations, to improve the accuracy of diagnosis.

The diagnoser 12 diagnoses the normality of the engine control unit during an idling-stop to automatically stop the engine 1. The diagnoser 12 can therefore properly diagnose the devices operating during the stop of the engine 1.

In specific, the diagnoser 12 diagnoses the stationary-state retainer 4 for keeping the stationary-state of the vehicle during an idling-stop to stop the engine 1, and the DC/DC converter 3 for feeding power to the electrical equipment such as the stationary-state retainer 4. Idling-stops and idling-starts are performed at flat roads or substantially flat roads, if any of the DC/DC converter 3 and the stationary-state retainer 4 is not diagnosed to be normal or is diagnosed to be abnormal during the stop of the engine 1. This configuration can avoid or prevent the unexpected behaviors of the vehicle regardless of some abnormality (failure) in the DC/DC converter 3 or the stationary-state retainer 4. Idling-stops in coasting and stationary states of the vehicle are available even in such a case, to achieve the compatibility between avoidance of the unexpected behaviors of the vehicle and the improved fuel efficiency.

The invention is not limited to the above-described embodiment and may be modified without departing from its gist. The individual features of the embodiment and its modifications may be selectively employed as necessary or properly combined with one another.

In the embodiment, the ECU 10 stops the idling if both the diagnostic condition and the idling-stop condition are satisfied. Alternatively, the ECU 10 may stop the idling if only the idling-stop condition is satisfied. In this case, the diagnoser 12 may be omitted from the ECU 10, to reduce the control loads for the idling-stop.

In the embodiment, the running-state road-grade estimator 11b estimates a road-grade $\theta_C$ through correction of the longitudinal acceleration $\alpha_S$ detected with the G-sensor 8 on the basis of the running state of the vehicle. Alternatively, the running-state road-grade $\theta_C$ may be acquired by multiplying "sin$\theta_S$ (where $\theta_S$ is the stationary-state road-grade)" by " $(\alpha_S-\alpha_V)/\alpha_S$." In other words, the running-state road-grade estimator 11b may estimate the road-grade $\theta_C$ through correction of the road-grade $\theta_S$ estimated with the stationary-state road-grade estimator 11a on the basis of the running state of the vehicle. This configuration can also ensure sufficient accuracy of estimation of both the stationary-state road-grade $\theta_S$ and the running-state road-grade $\theta_C$. The accurate running-state road-grade $\theta_C$ can be used for the condition to start an idling-stop, which leads to the compatibility between avoidance of the unexpected behaviors of the vehicle and the improved fuel efficiency.

In the embodiment, the running-state road-grade estimator 11b estimates a running-state road-grade on the basis of parameters corresponding to the running state of the vehicle. Alternatively, the running-state road-grade may be estimated on the basis of an image of the road on which the vehicle is running, or may be acquired via a wide area network, for example.

In the embodiment, the stationary-state road-grade $\theta_{PS}$ for the determination of satisfaction of the road-grade condition is steeper (i.e., has a higher value) than the coasting-state road-grade $\theta_{PC}$ for the same determination. Alternatively, the stationary-state road-grade $\theta_{PS}$ may be identical to the coasting-state road-grade $\theta_{PC}$, provided that the accuracy of the estimated running-state road-grade $\theta_C$ is sufficient. This configuration can ensure the opportunity for idling-stops in a coasting-state of the vehicle before diagnosis of the normality of the devices.

The road-grade acquirer 11 of the ECU 10 may acquire a coasting-state road-grade through the same estimation calculation as that for the stationary-state. Alternatively, the ECU 10 may further include a road-grade sensor to detect a coasting-state road-grade that can be used as it is. These configurations can reduce the calculation loads on the ECU 10. The configurations also allow the sensors required for the estimation calculation of the running-state road-grade $\theta_C$ to be omitted, thereby simplifying the structure.

In the embodiment, the diagnoser 12 diagnoses the devices at any timing. Alternatively, the diagnoser 12 may diagnose the devices only during the initial idling-stop. This configuration can reduce the number of diagnosis with the diagnoser 12, thereby reducing the control loads on the ECU 10.

Reference signs used in the description are listed as below:

| | |
|---|---|
| 1 | engine, |
| 2 | battery, |
| 3 | DC/DC converter, |
| 4 | stationary-state retainer, |
| 4a | brake, |
| 4b | motor pump, |
| 5 | other devices, |
| 6 | brake switch, |
| 7 | speed sensor, |
| 8 | G-sensor, |
| 9 | other sensors, |
| 10 | ECU, |
| 11 | road-grade acquirer, |
| 11a | stationary-state road-grade estimator, |
| 11b | running-state road-grade estimator, |
| 12 | diagnoser, |
| 14 | idling-stop condition determiner, |
| 15 | idling-stop controller, |
| 16 | idling-start controller, |
| 20 | ignition switch, |
| $\theta_{PC1}$ | first coasting-state road-grade, |
| $\theta_{PC2}$ | second coasting-state road-grade, |

$\theta_{PS1}$ first stationary-state road-grade, and
$\theta_{PS2}$ second stationary-state road-grade.

The invention thus described, it will be obvious that the same may be varied in many ways without departing from the scope of the invention, as defined by the appended claims.

## Claims

1. An engine control unit comprising:

   an idling-stop controller (15) to automatically stop an engine (1) equipped in a vehicle if a coasting-state idling-stop condition or a stationary-state idling-stop condition is satisfied, the coasting-state idling-stop condition including a coasting-state of the vehicle at a speed ($V_1$) or lower, the stationary-state idling-stop condition including a stationary-state of the vehicle;
   an idling-start controller (16) to restart the engine (1) if a restart condition is satisfied during an automatic stop of the engine (1) by the idling-stop controller (15);
   a diagnoser (12) to find, during the automatic stop of the engine (1) or a restart of the engine (1), some abnormality in devices operating during an automatic stop of the engine (1) or the restart of the engine (1); and
   a road-grade acquirer (11) to acquire a road-grade ($\theta$) at the location of the vehicle, **characterized in that**
   the coasting-state idling-stop condition includes the road-grade ($\theta$) acquired by the road-grade acquirer (11) being not higher than a first coasting-state road-grade ($\theta_{PC1}$) before an initial automatic stop of the engine (1) by the idling-stop controller (15),
   the coasting-state idling-stop condition includes the road-grade ($\theta$) acquired by the road-grade acquirer (11) being not higher than a second coasting-state road-grade ($\theta_{PC2}$) higher than the first coasting-state road-grade ($\theta_{PC1}$), after the initial automatic stop of the engine (1) by the idling-stop controller (15),
   the stationary-state idling-stop condition includes the road-grade ($\theta$) acquired by the road-grade acquirer (11) being not higher than a first stationary-state road-grade ($\theta_{PS1}$) higher than the first coasting-state road-grade ($\theta_{PC1}$), before the initial automatic stop of the engine (1) by the idling-stop controller (15),
   the stationary-state idling-stop condition includes the road-grade ($\theta$) acquired by the road-grade acquirer (11) being not higher than a second stationary-state road-grade ($\theta_{PS2}$) higher than the first stationary-state road-grade ($\theta_{PS1}$), after the initial automatic stop of the engine (1) by the idling-stop controller (15),
   the road-grade acquirer (11) acquires a road-grade ($\theta$) estimated based on a longitudinal acceleration ($\alpha_S$) of the vehicle in a stationary-state, and acquires a road-grade ($\theta$) estimated based on the longitudinal acceleration ($\alpha_S$) of the vehicle and another acceleration ($\alpha_V$) of the vehicle in a running-state, and
   the idling-stop controller (15) inhibits an automatic stop of the engine (1) if the diagnoser (12) finds some abnormality in the devices operating during an automatic stop of the engine (1) or a restart of the engine (1).

2. The engine control unit according to claim 1, wherein the idling-start controller (16) restarts the engine (1) if the diagnoser (12) finds some abnormality in the devices operating during an automatic stop of the engine (1) or a restart of the engine (1), during the automatic stop of the engine (1).

3. The engine control unit according to claim 1 or 2, wherein the devices operating during an automatic stop the engine (1) or a restart of the engine (1) include a stationary-state retainer (4) to maintain braking force to the vehicle for keeping the stationary-state of the vehicle, during an automatic stop of the engine (1) of the vehicle in the stationary-state.

## Patentansprüche

1. Motorsteuereinheit mit:

   einer Leerlaufstopp-Steuereinrichtung (15), um einen Motor (1) automatisch zu stoppen, der in einem Fahrzeug vorgesehen ist, wenn eine Leerlauffahrzustand-Leerlaufstoppbedingung oder eine Stillstandszustand-Leerlaufstoppbedingung erfüllt ist, wobei die Leerlauffahrzustand-Leerlaufstoppbedingung einen Leerlauffahrzustand des Fahrzeugs bei einer Geschwindigkeit ($V_1$) oder weniger aufweist und die Stillstandszustand-Leerlaufstoppbedingung einen Stillstandszustand des Fahrzeugs aufweist;
   einer Leerlaufstart-Steuereinrichtung (16), um den Motor (1) wieder zu starten, wenn eine Neustartbedingung während eines automatischen Stopps des Motors (1) durch die Leerlaufstopp-Steuereinrichtung (15) erfüllt ist;
einer Diagnoseeinrichtung (12), um während des automatischen Stopps des Motors (1) oder eines Neustarts des Motors (1) einen anormalen Zustand von Vorrichtungen festzustellen, die während eines automatischen Stopps des Motors (1) oder des Neustarts des Motors (1) arbeiten; und
eine Straßenneigungs-Erfassungseinrichtung (11), um eine Straßenneigung (θ) am Ort des Fahrzeugs zu erfassen, **dadurch gekennzeichnet, dass**
die Leerlauffahrzustand-Leerlaufstoppbedingung aufweist, dass vor einem anfänglichen automatischen Stopp des Motors (1) durch die Leerlaufstopp-Steuereinrichtung (15) die durch die Straßenneigungs-Erfassungseinrichtung (11) erfasste Straßenneigung (θ) nicht größer als eine erste Leerlauffahrzustand-Straßenneigung ($\theta_{PC1}$) ist,
die Leerlauffahrzustand-Leerlaufstoppbedingung aufweist, dass nach dem anfänglichen automatischen Stopp des Motors (1) durch die Leerlaufstopp-Steuereinrichtung (15) die durch die Straßenneigungs-Erfassungseinrichtung (11) erfasste Straßenneigung (θ) nicht größer als eine zweite Leerlauffahrzustand-Straßenneigung ($\theta_{PC2}$) ist, die größer als die erste Leerlauffahrzustand-Straßenneigung ($\theta_{PC1}$) ist,
die Stillstandszustand-Leerlaufstoppbedingung aufweist, dass vor dem anfänglichen automatischen Stopp des Motors (1) durch die Leerlaufstopp-Steuereinrichtung (15) die durch die Straßenneigungs-Erfassungseinrichtung (11) erfasste Straßenneigung (θ) nicht größer als eine erste Stillstandszustands-Straßenneigung ($\theta_{PS1}$) ist, die größer als die erste Leerlauffahrzustand-Straßenneigung ($\theta_{PC1}$) ist,
die Stillstandszustand-Leerlaufstoppbedingung aufweist, dass nach dem anfänglichen automatischen Stopp des Motors (1) durch die Leerlaufstopp-Steuereinrichtung (15) die durch die Straßenneigungs-Erfassungseinrichtung (11) erfasste Straßenneigung (θ) nicht größer als eine zweite Stillstandszustands-Straßenneigung ($\theta_{PS2}$), die größer als die erste Stillstandszustands-Straßenneigung ($\theta_{PS1}$) ist,
die Straßenneigungs-Erfassungseinrichtung (11) eine Straßenneigung (θ) erfasst, die beruhend auf einer Längsbeschleunigung ($\alpha_S$) des Fahrzeugs in einem Stillstandszustand geschätzt wird, und eine Straßenneigung (θ) erfasst, die beruhend auf der Längsbeschleunigung ($\alpha_S$) des Fahrzeugs und einer anderen Beschleunigung ($\alpha_V$) des Fahrzeugs in einem Fahrzustand geschätzt wird, und
die Leerlaufstopp-Steuereinrichtung (15) einen automatischen Stopp des Motors (1) verhindert, wenn die Diagnoseeinrichtung (12) einen anormalen Zustand der Vorrichtungen feststellt, die während eines automatischen Stopps des Motors (1) oder eines Neustarts des Motors (1) arbeiten.

2. Motorsteuereinheit nach Anspruch 1, wobei die Leerlaufstart-Steuereinrichtung (16) den Motor (1) neu startet, wenn die Diagnoseeinrichtung (12) einen anormalen Zustand der Vorrichtungen, die während eines automatischen Stopps des Motors (1) oder eines Neustarts des Motors (1) arbeiten, während des automatischen Stopps des Motors (1) feststellt.

3. Motorsteuereinheit nach Anspruch 1 oder 2, wobei die Vorrichtungen, die während eines automatischen Stopps des Motors (1) oder eines Neustarts des Motors (1) arbeiten, eine Stillstandszustands-Beibehaltungseinrichtung (4) aufweisen, um eine Bremskraft für das Fahrzeug zum Erhalten des Stillstandszustands des Fahrzeugs während eines automatischen Stopps des Motors (1) des Fahrzeugs im Stillstandszustand aufrechtzuerhalten.

## Revendications

1. Unité de commande de moteur comprenant :

un dispositif de commande d'arrêt au ralenti (15) pour arrêter automatiquement un moteur (1) monté dans un véhicule si une condition d'arrêt au ralenti de marche en roue libre ou une condition d'arrêt au ralenti d'état stationnaire est satisfaite, la condition d'arrêt au ralenti de marche en roue libre comportant une marche en roue libre du véhicule inférieure ou égale à une vitesse ($V_1$), la condition d'arrêt au ralenti d'état stationnaire comportant un état stationnaire du véhicule ;
un dispositif de commande de démarrage au ralenti (16) pour redémarrer le moteur (1) si une condition de redémarrage est satisfaite pendant un arrêt automatique du moteur (1) par le dispositif de commande d'arrêt au ralenti (15) ;
un dispositif de diagnostic (12) pour trouver, pendant l'arrêt automatique du moteur (1) ou un redémarrage du moteur (1), une anomalie dans des dispositifs fonctionnant pendant un arrêt automatique du moteur (1) ou le redémarrage du moteur (1) ; et
un dispositif d'acquisition de pente de route (11) pour acquérir une pente de route (θ) à l'emplacement du véhicule, **caractérisé en ce que**

la condition d'arrêt au ralenti de marche en roue libre implique que la pente de route (θ) acquise par le dispositif d'acquisition de pente de route (11) ne soit pas supérieure à une première pente de route de marche en roue libre ($\theta_{PC1}$) avant un arrêt automatique initial du moteur (1) par le dispositif de commande d'arrêt au ralenti (15), la condition d'arrêt au ralenti de marche en roue libre implique que la pente de route (θ) acquise par le dispositif d'acquisition de pente de route (11) ne soit pas supérieure à une deuxième pente de route de marche en roue libre ($\theta_{PC2}$) supérieure à la première pente de route de marche en roue libre ($\theta_{PC1}$), après l'arrêt automatique initial du moteur (1) par le dispositif de commande d'arrêt au ralenti (15),
la condition d'arrêt au ralenti d'état stationnaire implique que la pente de route (θ) acquise par le dispositif d'acquisition de pente de route (11) ne soit pas supérieure à une première pente de route d'état stationnaire ($\theta_{PS1}$) supérieure à la première pente de route de marche en roue libre ($\theta_{PC1}$), avant l'arrêt automatique initial du moteur (1) par le dispositif de commande d'arrêt au ralenti (15),
la condition d'arrêt au ralenti d'état stationnaire implique que la pente de route (θ) acquise par le dispositif d'acquisition de pente de route (11) ne soit pas supérieure à une deuxième pente de route d'état stationnaire ($\theta_{PS2}$) supérieure à la première pente de route d'état stationnaire ($\theta_{PS1}$), après l'arrêt automatique initial du moteur (1) par le dispositif de commande d'arrêt au ralenti (15),
le dispositif d'acquisition de pente de route (11) acquiert une pente de route (θ) estimée sur la base d'une accélération longitudinale ($\alpha_S$) du véhicule dans un état stationnaire, et acquiert une pente de route (θ) estimée sur la base de l'accélération longitudinale ($\alpha_S$) du véhicule et d'une autre accélération ($\alpha_V$) du véhicule dans un état de déplacement, et
le dispositif de commande d'arrêt au ralenti (15) inhibe un arrêt automatique du moteur (1) si le dispositif de diagnostic (12) trouve une anomalie dans les dispositifs fonctionnant pendant un arrêt automatique du moteur (1) ou un redémarrage du moteur (1).

**2.** Unité de commande de moteur selon la revendication 1, dans laquelle le dispositif de commande de démarrage au ralenti (16) redémarre le moteur (1) si le dispositif de diagnostic (12) trouve une anomalie dans les dispositifs fonctionnant pendant un arrêt automatique du moteur (1) ou un redémarrage du moteur (1), pendant l'arrêt automatique du moteur (1).

**3.** Unité de commande de moteur selon la revendication 1 ou 2, dans laquelle les dispositifs fonctionnant pendant un arrêt automatique du moteur (1) ou un redémarrage du moteur (1) comportent un dispositif de retenue d'état stationnaire (4) pour maintenir une force de freinage du véhicule pour garder l'état stationnaire du véhicule, pendant un arrêt automatique du moteur (1) du véhicule à l'état stationnaire.

FIG. 1

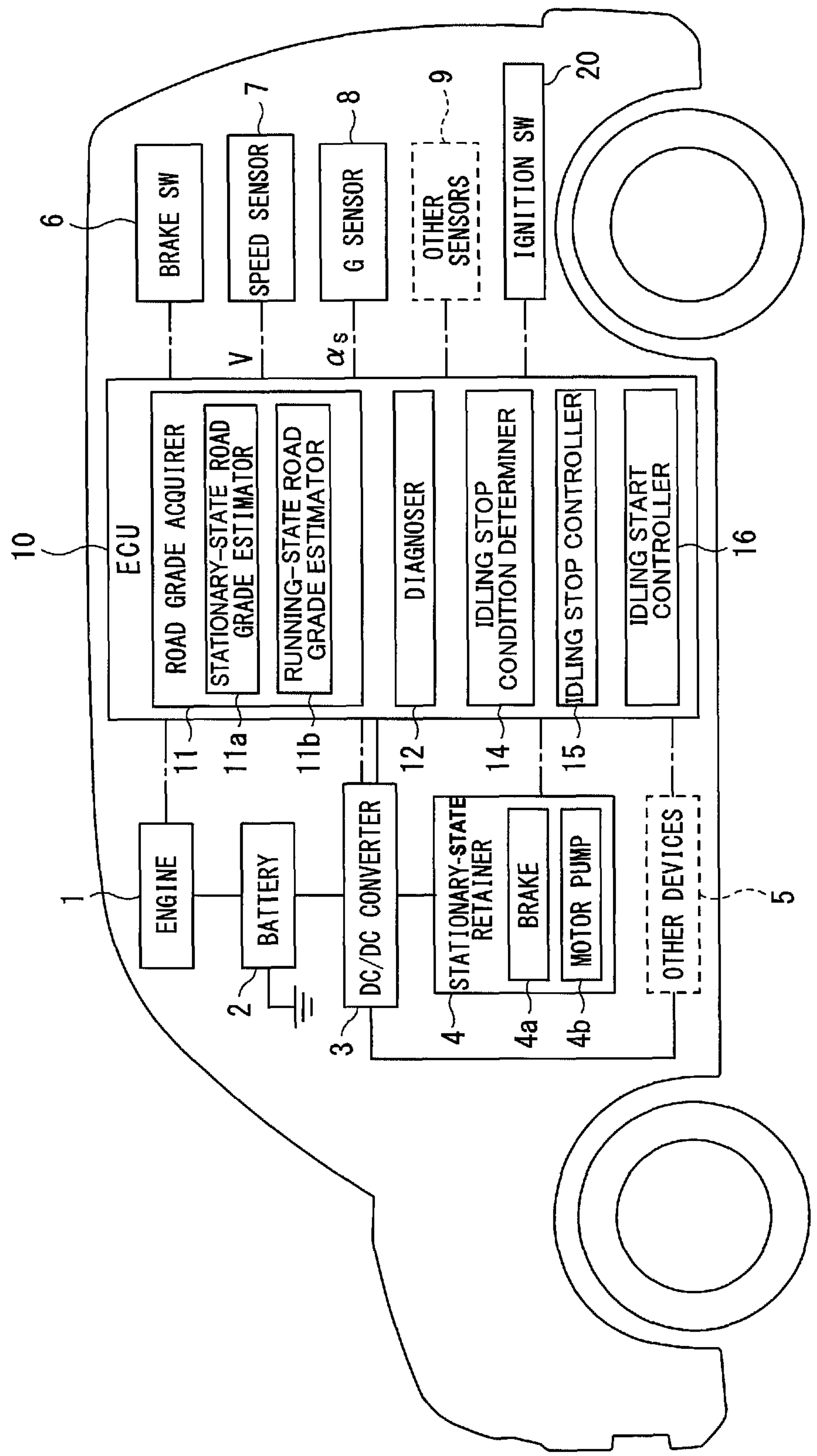
ENGINE
BATTERY
DC/DC CONVERTER
STATIONARY-STATE RETAINER
BRAKE
MOTOR PUMP
OTHER DEVICES
ECU
ROAD GRADE ACQUIRER
STATIONARY-STATE ROAD GRADE ESTIMATOR
RUNNING-STATE ROAD GRADE ESTIMATOR
DIAGNOSER
IDLING STOP CONDITION DETERMINER
IDLING STOP CONTROLLER
IDLING START CONTROLLER
BRAKE SW
SPEED SENSOR
G SENSOR
OTHER SENSORS
IGNITION SW
V
αs
1
2
3
4
4a
4b
5
6
7
8
9
10
11
11a
11b
12
14
15
16
20

FIG. 2

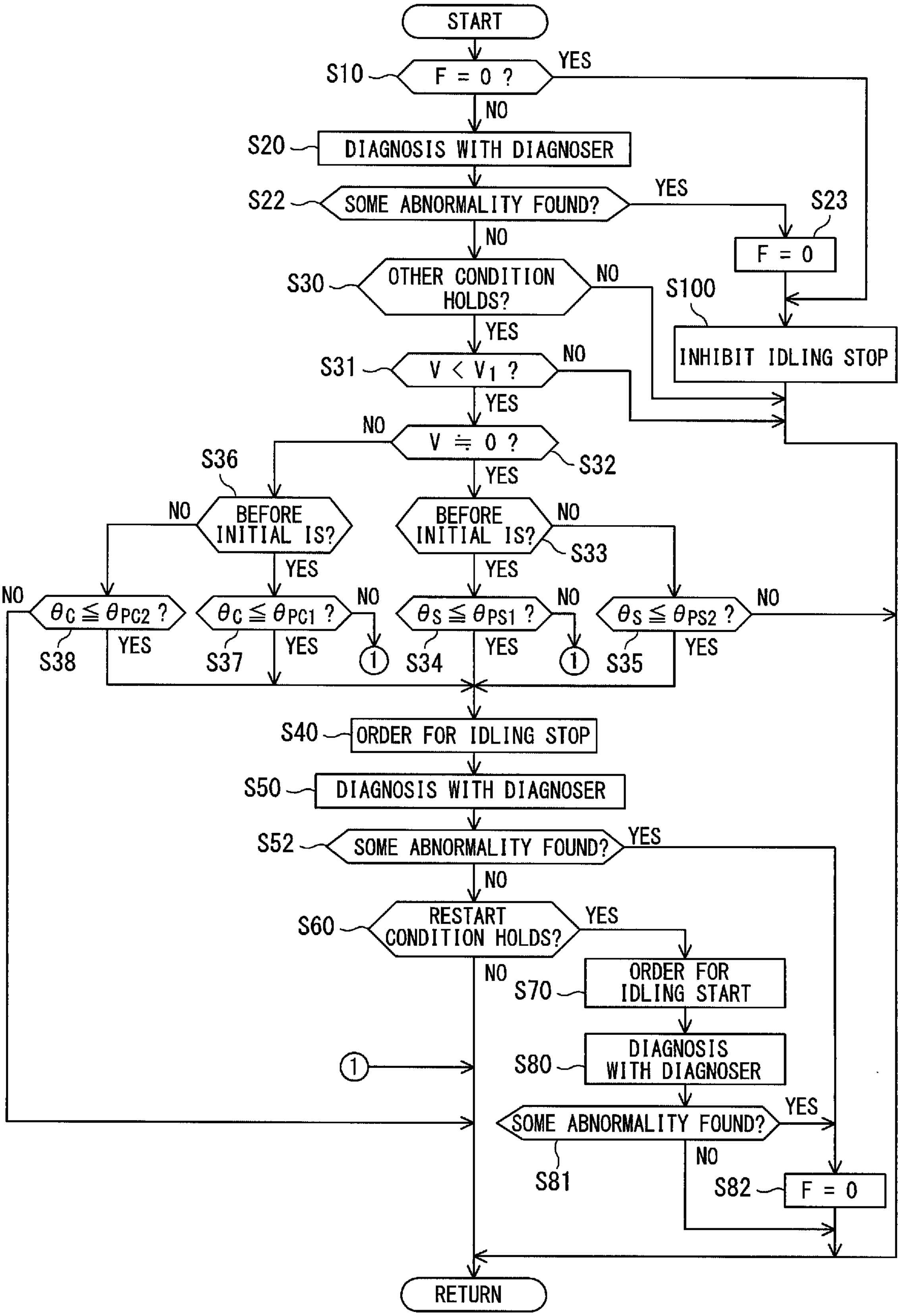
START
S10
F = 0 ?
YES
NO
S20
DIAGNOSIS WITH DIAGNOSER
S22
SOME ABNORMALITY FOUND?
YES
S23
F = 0
NO
S30
OTHER CONDITION HOLDS?
NO
S100
INHIBIT IDLING STOP
YES
S31
V < V1 ?
NO
YES
NO
V ≒ 0 ?
S32
S36
YES
NO
BEFORE INITIAL IS?
NO
BEFORE INITIAL IS?
S33
YES
YES
NO
θC ≦ θPC2 ?
θC ≦ θPC1 ?
NO
θS ≦ θPS1 ?
NO
θS ≦ θPS2 ?
NO
YES
YES
1
YES
1
YES
S38
S37
S34
S35
S40
ORDER FOR IDLING STOP
S50
DIAGNOSIS WITH DIAGNOSER
S52
SOME ABNORMALITY FOUND?
YES
NO
S60
RESTART CONDITION HOLDS?
YES
NO
ORDER FOR IDLING START
S70
1
S80
DIAGNOSIS WITH DIAGNOSER
SOME ABNORMALITY FOUND?
YES
NO
S81
S82
F = 0
RETURN

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012255383 A
- JP 2011196288 A
- EP 2570651 A2
- EP 2597291 A1